## Europäisches Patentamt

## European Patent Office

## Office européen des brevets

(11) Publication number: **0 154 676**
**B1**

# EUROPEAN PATENT SPECIFICATION

(45) Date of publication of patent specification: **17.02.88**

(51) Int. Cl.⁴: **C 10 G 11/18, C 10 G 47/30**

(21) Application number: **84110649.5**

(22) Date of filing: **07.09.84**

(54) Use of dual-function lift gas in a FCC reactor riser.

(30) Priority: **29.02.84 US 584681**

(43) Date of publication of application:
**18.09.85 Bulletin 85/38**

(45) Publication of the grant of the patent:
**17.02.88 Bulletin 88/07**

(84) Designated Contracting States:
**AT DE FR GB IT NL**

(56) References cited:
**EP-A-0 074 501**
**EP-A-0 097 829**
**US-A-3 894 932**
**US-A-4 336 160**
**US-A-4 422 925**
**US-A-4 427 537**
**US-A-4 427 539**
**US-A-4 432 863**

(73) Proprietor: **UOP Inc.**
**10 UOP Plaza Algonquin & Mt. Prospect Roads**
**Des Plaines Illinois 60016 (US)**

(72) Inventor: **Hammerschaimb, Harold Ulrich**
**4377 Central Avenue**
**Western Springs Illinois 60553 (US)**
Inventor: **Lomas, David Alfred**
**6 South Forest Street**
**Arlington Heights Illinois 60004 (US)**

(74) Representative: **Weber, Dieter, Dr. et al**
**Dr. Dieter Weber und Klaus Seiffert**
**Patentanwälte Gustav-Freytag-Strasse 25**
**Postfach 6145**
**D-6200 Wiesbaden 1 (DE)**

Courier Press, Leamington Spa, England.

# 0 154 676

**Description**

## BACKGROUND OF THE INVENTION

Field of the Invention

The field of art to which the claimed invention pertains is the fluid catalytic cracking of hydrocarbons. More specifically, the claimed invention relates to a process for the fluid catalytic cracking of hydrocarbons where a particular type of gaseous material is introduced into the reactor riser upstream of the introduction of the feed steam to be cracked in order to accomplish selective carbonization of active sites on the catalyst while accelerating the catalyst to a velocity sufficient to provide excellent catalyst-feed interaction at the point of feed introduction.

## BACKGROUND INFORMATION

There are a number of continuous cyclical processes employing fluidized solid techniques in hwich carbonaceous materials are deposited on the solids in the reaction zone and the solids are conveyed during the course of the cycle to another zone where carbon deposits are at least partially removed by combustion in an oxygen-containing medium. The solids from the latter zone are subsequently withdrawn and reinforced in whole or in part to the reaction zone.

One of the more important processes of this nature is the fluid catalytic cracking (FCC) process for the conversion of relatively high-boiling hydrocarbons to lighter hydrocarbons boiling in the heating oil or gasoline (or lighter) range. The hydrocarbon feed is contacted in one or more reaction zones with the particulate cracking catalyst maintained in a fluidized state under conditions suitable for the conversion of hydrocarbons.

Obtaining the desired reaction products from a fluidized catalytic cracking zone demands proper interaction of the catalyst and the feed stream. A proper interaction will bring the catalyst having the desired activity and selectivity characteristics into contact with all feed molecules for a uniform period of time so that the most beneficial product stream is obtained without causing undue production of undesired products such as light gases and coke. Consequently, optimizing FCC operation presents chemical problems in regard to controlling activity and selectivity of the catalyst and physical problems in terms of uniformly contacting the feed with catalyst and maintaining the same period of catalyst contact for the continuously entering feed, thereby avoiding undesired side reaction such as over-cracking.

The US—A—4 427 537 discloses the catalytic conversion of hydrocarbons by introducing the catalyst and a fluidizing gas into the bottom of a riser and the feed above said introduction of catalyst and fluidizing gas. As fluidizing gases carbon dioxide, steam and gaseous hydrocarbons are mentioned.

The US—A—4 432 863 describes a process for catalytically converting hydrocarbons in a riser in the bottom portion of which a reducing zone is provided. Into said reducing zone hydrogen and methane are introduced to reduce the regenerated catalyst. Additional lift gas may be introduced, and the feed may be introduced downstream of the reducing zone.

Further the US—A—3 894 932 discloses a process for converting a gas oil feed and a gaseous fraction to form aromatics and isobutane by fluid catalytic cracking. The catalyst is mixed with $C_3$—$C_4$-hydrocarbon gas in a lower part of the riser, the gas oil being introduced downstream from the gas oil introduction the $C_3$—$C_4$ hydrocarbon gas is not used to treat the catalyst.

According to US—A—3 042 196 beginning with a light cycle oil, progressively heavier components are added to an up-flowing catalyst stream in a reactor riser so as to use a single catalyst and a single cracking zone to convert the elements of crude oil. In US—A—3 617 497 a light gas oil is mixed with a diluent vapor such as methane or ethylene at or near the bottom of a reactor riser with hot regenerated catalyst, introduced at the same point in the riser or very close downstream, with the mixture then contacted with heavy gas oil at the top of the riser so as to enhance gasoline yield. In US—A—3 706 654 naphtha diluent may be added to the bottom of a reactor riser to aid in carrying upwardly into the riser the regenerated catalyst stream. According to US—A—3 849 291 it is disclosed that a gasiform diluent material comprising $C_4$+ hydrocarbons and particularly $C_5$+ hydrocarbons may be used to form a suspension with freshly regenerated catalyst which suspension is caused to flow through an initial portion of a riser reactor before bringing the hydrocarbon reactant material in contact therewith in a downstream portion of the reactor so as to achieve a very short residence time (1 to 4 seconds) that the hydrocarbon is in contact with the catalyst suspension in the riser reactor (catalyst residence time).

The US—A—4 422 925 discusses passing a mixture of hydrocarbons, such as ethane, propane, butane, etc., and catalyst up through a riser reactor at an average superficial gas velocity within the range from 12.2—18.3 meters/sec, with a catalyst to hydrocarbon weight ratio of about 5 to about 10 so as to produce normally gaseous olefins.

There are additional references with show use of a lift gas in non-catalytic systems. For example, in US—A—4 427 538 a gas which may be a light hydrocarbon is mixed with an inert solid at the bottom part of a vertical confined conduit and a heavy petroleium fraction is introduced at a point downstream so as to vary the residence time of the petroleum fraction in the conduit. Similarly, in US—A—4 427 539 a $C_4$ minus gas is used to accompany particles of little or no catalytic activity up a riser upstream of charged residual oil so as to aid in dispersing the oil.

Finally, it is taught in US—A—4 848, 4 382 015, 4 404 090 and 4 325 811 that passivation of

2

contaminating metals on an FCC catalyst may be effected by contacting hot regenerated catalyst with hydrogen and/or light hydrocarbon gas.

The process of the present invention, in contradistinction to the teachings of the above refernces, comprises a novel method of introducing a lift gas composition especially suited for treatment of a regenerated FCC catalyst in an FCC process in a manner that will simultaneously beneficial condition the catalyst prior to contact with feed and deliver the treated particles to the reaction zone in a flow regime which provides excellent catalyst and feed interaction.

The primary objective of the present invention is to provide an efficient method for selectively conditioning and delivering regenerated FCC catalyst to an FCC reaction zone such that the yield of desired products is maximized.

The process for converting a charge stock comprising normally liquid hydrocarbons into lower boiling hydrocarbons according to the invention in a generally vertically oriented riser conversion zone by passing an upflowing suspension consisting essentially of hot regenerated active fluid catalytic cracking catalyst in a lift gas through a lower treatment section of said vertically orientated riser conversion zone and introducing the charge stock into the upflowing suspension at a locus in the riser conversion zone downstream of the lower portion to form a mixture of catalyst, charge stock and lift gas having the catalyst relatively uniformly distributed therethrough and thereafter reacting the charge stock with the catalyst in the upper portion of the riser conversion zone at reaction conditions sufficient to effect the desired conversion is characterized in that the lift gas comprises hydrocarbons including not more than 10 mole % $C_3$ and heavier hydrocarbons (calculated on a water-free basis) and is introduced at treatment conditions selected to selectively carbonize reaction sites on the catalyst prior to any contact with the charge stock while simultaneously accelerating the catalyst to a velocity sufficient to provide turbulent dilute flow at the point of contact with the charge stock.

In a more limited embodiment, the present invention comprises a process for converting normally liquid hydrocarbons in a vertically oriented riser conversion zone with an active fluid catalytic cracking catalyst which comprises: (a) passing an upflowing suspension of hot regenerated active fluid catalytic cracking catalyst in a lift gas comprising hydrocarbons including not more than 10 mole % $C_3$ and heavier hydrocarbons (calculated on a water-free basis) through a treatment section of a vertically orientated riser conversion zone at a gas velocity of from about 1.8 to less than 12.2 meters per second, and for a catalyst residence time from 0.5 to 15 seconds, the weight ratio of catalyst to hydrocarbon in the lift gas being greater than 80; and (b) introducing the charge stock into the upflowing suspension at a locus in the riser conversion zone downstream of the lower portion to form a mixture of catalyst, charge stock and lift gas having the catalyst relatively uniformly distributed therethrough and thereafter reacting the charge stock with the catalyst in the upper portion of the riser conversion zone.

## Description of the Invention

In a typical FCC process flow, finely divided regenerated calalyst leaves the regeneration zone at a certain temperature and contacts a feedstock in a lower portion of reactor riser zone. While the resulting mixture, which has a temperature of from 200°C to 700°C, passes up through the riser, conversion of the feed to lighter products occurs and coke is deposited on the catalyst. The effluent from the riser is discharged into a disengaging space where additional conversion can take place. The hydrocarbon vapors, containing entrained catalyst, are then passed through one or more cyclone separation means to separate any spent catalyst from the hydrocarbon vapor stream. The separated hydrocarbon vapor stream is passed into a fractionation zone known in the art as the main column wherein the hydrocarbon effluent is separated into such typical fractions as light gases and gasoline, light cycle oil, heavy cycle oil and slurry oil. Various fractions from the main column can be recycled along with the feedstock to the reactor riser. Typically, fractions such as light gases and gasoline are further separated and processed in a gas concentration process located downstream of the main column. Some of the fractions from the main column, as well as those recovered from the gas concentration process may be recovered as final product streams. The separated spent catalyst passes into the lower portion of the disengaging space and eventually leaves that zone passing through stripping means in which a stripping gas, usually steam, contacts the spent catalyst purging adsorbed and interstitual hydrocarbons from the catalyst. The spent catalyst containing coke leaves the stripping zone and passes into a regeneration zone where, in the presence of fresh regeneration gas and at a temperature of from 620°C to 760°C, a combustion of coke produces regenerated catalyst and flue gas containing carbon monoxide, carbon dioxide, water, nitrogen and perhaps a small quantity of oxygen. Usually the fresh regeneration gas is air, but it could be air enriched or deficient in oxygen. Flue gas is separated from entrained regenerated catalyst by cyclone separation means located within the regeneration zone and separated flue gas is passed from the regeneration zone, typically, to a carbon monoxide boiler where the chemical heat of carbon monoxide is recovered by combustion as a fuel for the production of steam, or, if carbon monoxide combustion in the regeneration zone is complete, which is the preferred mode of operation, the flue gas passes directly to sensible heat recovery means and from there to a refinery stack. Regenerated catalyst which was separated from the flue gas is returned to the lower portion of the regeneration zone which typically is maintained at a higher catalyst density. A stream of regenerated catalyst leaves the regeneration zone, and as previously mentioned, contacts the feedstock in the reaction zone.

3

# 0 154 676

Looking now at this invetion, the stream of catalyst that leaves the regenerator enters a substantially vertical conduit which comprises a riser conversion zone having two sections. The lower end of the riser serves as the catalyst treatment section while the upper portion performs the usual reaction function of an FCC riser.

Hot catalyst and lift gas enters the treatment section of the riser at its lowermost end. Prior to contact with the lift gas medium, hot catalyst leaves the regenerator as a dense stream of particles flowing in a downward direction. Hence the catalyst particles entering the treatment section have with respect to flow within the riser, either zero velocity or a negative velocity. In initially accelerating the particles, a high degree of turbulence and backmixing is inevitable. Performing the initial catalyst acceleration at or near the point of feed introduction will vary the residence time for feed entering the riser. By using only a lift gas to provide the initial upward impetus to the catalyst, this invention avoids one cause of maldistribution and variable retention times for the feed hydrocarbons. After initial catalyst entry into the riser, other phenomena of a fluidized stream can cause a variable residence time within the riser. One of these phenomena is slippage between the flowing gas and the catalyst particles which will occur due to differences in density and momentum of the particles and in a non-uniform manner due to variations in particle size. In addition, catalyst particles traveling close to the wall of the riser will experience extended residence times as a result of increased drag forces. These drag forces on the catalyst particles will increase with the density of the flowing stream. The present invention minimizes these problems by accelerating the catalyst in the treatment section of the riser to achieve dilute turbulent flow prior to feed introducton. Transporting the catalyst particles in dilute turbulent flow gives the various sizes of particles time to evenly accelerate so that a more uniform velocity is attained at point of feed introduction; results in reduced catalyst density which lowers overall drag forces; and provides some mixing of the catalyst to avoid a boundary region of slower moving catalyst particles near the wall of the riser. Accordingly, the treatment riser of this invention performs the significant function of overcoming substantial physical problems associated with particle flow before the feed contacts the catalyst.

Catalysts which can be used in the process of this invention include those known to the art as fluidized catalytic cracking catalysts. Specifically, the high activity crystalline aluminosilicate or zeolite-containing catalysts can be used and are preferred because their higher resistance to the deactivating effects of high temperatures, exposure to steam, and exposure to metals contained in the feedstock. Zeolites are the most commonly used crystalline aluminosilicates in FCC.

In addition to establishing an advantageous flow regime for catalyst exiting the treatment section of the riser, the lift gas used in the present invention also performs the important function of reacting with the catalyst prior to feedstock introduction so as to enhance desired and suppress undesired catalytic properties. Specifically, we have found that a lift gas comprising hydrycarbons which when calculated on a water-free basis include not more than 10 mole % $C_3$ and heavier hydrocarbons will selectively carbonize active contaminating metal sites on the catalyst to reduce hydrogen and coke production effects of these metal sites and will selectively carbonize acid sites on the catalyst, thus leading to greater selectivity for desired products and lower coke and light gas yield from a hydrocarbon charge. Aside from the usual addition of water or steam, the lift gas may contain reaction species such as $H_2$, $H_2S$, $N_2$, CO and/or $CO_2$.

The advantages of reduced coke and dry gas yield associated with selective carbonization along with the improved flow distribution for catalyst exiting the treatment section will benefit a typical FCC unit when processing the usual heavy feedstock. Thus this invention has application to the processing of vacuum gas oils and other typical FCC charge stocks.

However, this invention is particularly useful for FCC units processing heavy or residual charge stocks, i.e., those boiling above 482°C which frequently have a high metals content and which cause a high degree of coke deposition on the catalyst when they crack. Contaminant metals such as nickel, iron, cobalt and vanadium found in the charge stock usually influence the regeneration operation, catalyst selectivity, catalyst activity and the fresh catalyst makeup required to maintain a constant activity. Metals contained in the feed are deposited on the catalyst and not only change its selectivity in the direction of less gasoline and more coke and light gas in a given reactor system, but tend to deactivate the catalyst. These excessive amounts of coke and gas create what are sometimes insurmountable problems such as exceeding the regenerator capacity as well as the capacity of the gas concentration facilities. Another problem with these types of feedstocks, which are usually contaminated with the aforementioned undesirable metal contaminants, is the harmful influence of even minute amounts of these metals. These metals, and in particular nickel and vanadium, will contribute an undesirable activity to the catalyst on which they deposit which is responsible for the production of still more hydrogen and coke on the catalyst. The presence of large quantities of these metals may also block access to cracking sites and thus lower the activity of the catalyst.

The lift gas composition and treatment conditions called for by the present invention achieves minimization of the above undesirable characteristics inherent in the use of heavy or residual charge stocks. The presence alone of the lift gas will effect reductions of the heavy hydrocarbon partial pressure which will in turn reduce coke deposition to some extent. Furthermore, in addition to carbonizing the acid sites on the catalyst, it has been found that the lift gas of this invention will selectively carbonize active contaminating metal sites on the catalyst to reduce the hydrogen and coke production effects of these metal sites.

4

Notwithstanding anything implied in the above to the contrary, however, it is strongly emphasized that the lift gas composition and the catalyst flow conditions have, to some extent, a direct effect on the cracking reactions in the riser downstream of the feed introduction, and the catalyst-lift gas velocity, upstream of the feed introduction, to a certain degree, will also influence the cracking reactions. The point is that the entire reactor riser, upstream and downstream of where the feed is introduced, is an integrated system and all the parameters defining the present invention alone and in combination have direct and indirect effects on all reactions occurring throughout that system.

In regard to this interrelationship, there are several important features worth noting. First, it is essential that catalyst from the treatment section flow directly into the reaction section so that continuity of catalyst flow up the riser is maintained. However, the right amount of lift gas and the velocity of lift gas and catalyst up the riser will serve to tailor the temperature of the catalyst prior to feed introduction by sensible heat and reaction effects, and to provide acceleration of the catalyst in the direction of gas flow so that the catalyst is moving at a significant velocity by the time feed is introduced, thereby providing the previously discussed benefits of improved catalyst/heavy oil contacting, improved distribution, uniform catalyst residence time and reduced catalyst backmixing. Of course, in realizing the maximum benefit of this invention, various parameters may be optimized. An important parameter for optimization is the average superficial gas velocity in the catalyst treatment zone of from 1.8 to less than 12.2 meters per second up the riser. The velocity of the lift gas may be easily adjusted, independent of the catalyst to hydrocarbon in lift gas ratio, by the inclusion therein of up to 80 mole % water (steam). Other parameters that influence the treatment of the catalyst and the flow of catalyst prior to feed introduction are catalyst residence time, and the weight ratio of catalyst to hydrocarbon in the lift gas-catalyst mixture. The optimum range of these conditions for this invention is a catalyst residence time in the treatment zone of from 0.5 to 15 seconds and a weight ratio of catalyst to hydrocarbon in the lift gas-catalyst mixture of greater than 80:1, with a value in the range of 100:1 to 800:1 being especially preferred. Since the catalyst and lift gas mixture will be transferred directly to the reaction zone of the riser, the exiting temperature of this stream must be sufficient to heat the feed stock to a temperature sufficient to carry out the cracking reaction. Suitable treatment temperatures maintained in the lower section of the riser will usually fall in the range of 500°C to 800°C.

There are many possible sources of a suitable lift gas in the typical refinery, but two convenient sources would be well known to those skilled in the art as absorber gas from the FCC gas concentration facilities, or gas from the main column overhead receiver after it has been compressed through at least one stage of a compressor followed by cooling.

The reactor riser configuration for practice of the process of the present invention in its simplest form would comprise a vertical conduit with lift gas injected into the bottom, hot regenerated catalyst flowing into the lift gas slightly above the point of lift gas injection and the feed injected at an appropriate point further downstream. However, the term "generally vertical" contemplates riser configurations wherein the lower portion of the treatment section will begin with an angled or curved portion of conduit. In terms of riser internals another possibility would be for the feed to flow concurrently up the lower portion of the riser separated from the catalyst and lift gas by a partition or baffle plate where upon entering the reaction section the two streams would merge. The partition could be in the form of an annular portion through which the lift gas and catalyst would flow before being combined at the appropriate time with feed traveling up the central portion.

The following non-limiting Example is illustrative of FCC operations in accordance with the process of our invention as compared with operations not using a lift gas and using a lift gas not within the scope of the present invention.

## Example

For this example, the process of the present invention was used in a first run followed by a run in which the lift gas used was of a compositon including heavy components which removed the process illustrated by that run from the scope of the present invention. Following is the data for those two runs including relevant operating conditions. The feedstock for both runs was an atmospheric resid. Also included, for purposes of comparison, is a calculated run representing the results that would be obtained using no lift gas and a feedstock and conditions, where applicable, identical to the first run.

|  | 1 | 2 | 3 |
|---|---|---|---|
|  | Present Invention | Heavy Lift Gas | Predicted |
| Run |  |  |  |
| Feedstock | — | Atmospheric Resid | — |
| Lift Gas (mol % dry basis) |  |  | N.A. |
| $N_2$ | 6.0 | 5.6 |  |
| CO | 1.1 | trace | " |
| $CO_2$ | 1.3 | 0.7 | " |
| $H_2S$ | 2.9 | — | " |
| $H_2$ | 19.8 | 18.4 | " |
| $C_1$ | 35.2 | 14.0 | " |
| $C_2$ (total) | 24.0 | 14.2 | " |
| $C_3$ (total) | 5.0 | 19.5 | " |
| $C_4$ (total) | 4.1 | 18.0 | " |
| $C_5$ (total) | 0.6 | 9.6 | " |
| $H_2O$ (mole % of lift gas) | 50.0 | 50.0 | " |
| Conditions |  |  |  |
| Gas Velocity up riser (m/sec) | 5.79 | 5.79 |  |
| Catalyst Residence time, lower portion (sec) | 11 sec | 11 sec |  |
| Catalyst/lift gas hydrocarbon (kg/kg) | 400 | 400 |  |
| Temperature lift gas/catalyst mixture | 710°C | 710°C |  |
| Yields |  |  |  |
| Dry gas (wt. %) | 2.6 | 6.6 | 4.7 |
| $C_3 + C_4$ (LV %) | 22.5 | 14.5 | 22.3 |
| Gasoline (180°C w 90%, LV %) | 56.1 | 56.3 | 55.8 |
| Light cycle oil (LV %) | 15.8 | 17.5 | 14.3 |
| Clarified oil (LV %) | 11.4 | 8.9 | 10.3 |
| Coke (wt. %) | 10.0 | 11.3 | 10.2 |

The above data shows the criticality of the lift gas composition having no more than a small amount of heavier components. The increases in dry gas and coke yield with the use of the heavier lift gas is quite pronounced. We believe that the yields of gasoline and light cycle oil obtained by the practice of the present invention could be improved without significantly increasing coke or dry gas make by further optimization of the process.

In addition, a comparison of the no lift gas case demonstrates the advantages of utilizing a lift gas stream.

**Claims**

1. A process for converting a charge stock comprising normally liquid hydrocarbons into lower boiling hydrocarbons in a generally vertically oriented riser conversion zone by passing an upflowing suspension consisting essentially of hot regenerated active fluid catalytic cracking catalyst in a lift gas through a lower treatment section of said vertically oriented riser conversion zone and introducing the charge stock into the upflowing suspension at a locus in the riser conversion zone downstream of the lower portion to form a mixture of catalyst, charge stock and lift gas having the catalyst relatively uniformly distributed therethrough and thereafter reacting the charge stock with the catalyst in the upper portion of the riser conversion zone at reaction conditions sufficient to effect the desired conversion characterized in that the lift gas comprises hydrocarbons including not more than 10 mole % $C_3$ and heavier hydrocarbons (calculated on a water-free basis) and is introduced at treatment conditions selected to selectively carbonize reaction sites on the catalyst prior to any contact with the charge stock while simultaneously accelerating the catalyst to a velocity sufficient to provide turbulent dilute flow at the point of contact with the charge stock.

2. The process of Claim 1 wherein the treatment conditions include a catalyst residence time in said lower section of 0.5 to 15 seconds, a temperature of 500 to 800°C and a weight ratio of catalyst to hydrocarbon in the lift gas greater than 80.

3. The process of Claim 1 wherein the average superficial gas velocity fo said lift gas in said lower section is 1.8 to less than 12.2 meters per second.

4. The process of Claim 1 wherein said lift gas comprises up to about 80 mole % steam.

5. The process of Claim 1 wherein said hot regenerated active fluid catalytic cracking catalyst is obtained from a fluid catalytic cracking catalyst is obtained from a fluid catalytic cracking unit regenerator and enters said lower section at a temperature of 620 to 760°C.

6. The process of Claim 1 wherein said lift gas also contains quantities of $H_2$, $H_2S$, $N_2$, CO or $CO_2$.

7. The process of Claim 1 wherein said charge stock comprises a heavy residual feedstock.

8. The process of Claim 1 wherein said lower portion of said vertically oriented riser conversion zone contains two axial flow spaces which are not in communication in the lower portion of said zone, wherein said catalyst and lift gas suspension flows upwardly in one of said flow spaces and wherein charge stock flows concurrent to said suspension in the other of said flow spaces merging at a locus appropriate to the introduction of said normally liquid hydrocarbons into said upflowing suspension.

9. The process of Claim 8 wherein said lower portion of said vertically oriented riser conversion zone comprises two concentric tubular members providing an annular flow space and a central flow space which are not in communication in the lower portion of said zone, wherein said catalyst and lift gas suspension flows upwardly in said annular flow space and wherein said charge stock flows concurrent to said suspension up the central space of said riser.

**Patentansprüche**

1. Verfahren zur Umwandlung eines normalerweise flüssige Kohlenwasserstoffe umfassenden Beschickungsmaterials in niedriger siedende Kohlenwasserstoffe in einer allgemein vertikal ausgerichteten Steigrohrumwandlungszone, indem man eine aufwärts fließende Suspension, die im wesentlichen aus heißem regeneriertem aktivem Katalysator für katalytisches Wirbelschichtkracken in einem Liftgas besteht, durch einen unteren Behandlungsabschnitt der vertikal ausgerichteten Steigrohrumwandlungszone führt und das Beschickungsmaterial in die aufwärts fließende Suspension an einer Stelle in der Steigrohrumwandlungszone abstromwärts von dem unteren Abschnitt unter Bildung eines Gemisches von Katalysator, Beschickungsmaterial und Liftgas einführt, wobei man den Katalysator darin relativ gleichmäßig verteilt hat, und danach das Beschickungsmaterial mit dem Katalysator in dem oberen Abschnitt der Steigrohrumwandlungszone bei ausreichenden Reaktionsbedingungen, um die erwünschte Umwandlung zu bewirken, um setzt, dadurch gekennzeichnet, daß das Liftgas Kohlenwasserstoffe einschließlich nicht mehr als 10 Mol-% $C_3$— und schwererer Kohlenwasserstoffe (berechnet auf wasserfreier Grundlage) umfaßt und bei derart ausgewählten Behandlungsbedingungen, die selektiv Reaktionsstellen auf dem Katalysator vor einem Kontakt mit dem Beschickungsmaterial verkoken, einführt, während gleichzeitig der Katalysator zu einer ausreichenden Geschwindigkeit beschleunigt wird, um turbulenten verdünnten Fluß am Punkt des Kontaktes mit dem Beschickungsmaterial zu bekommen.

2. Verfahren nach Anspruch 1, bei dem die Behandlungsbedingungen eine Katalysatorverweilzeit in dem unteren Abschnitt von 0,5 bis 15 sec, eine Temperatur von 500 bis 800°C und ein Gewichtsverhältnis von Katalysator zu Kohlenwasserstoff in dem Liftgas größer als 80 einschließen.

3. Verfahren nach Anspruch 1, bei dem die mittlere Gasoberflächengeschwindigkeit des Liftgases in dem unteren Abschnitt 1,8 bis weniger als 12,2 m/sec beträgt.

4. Verfahren nach Anspruch 1, bei dem das Liftgas bis zu etwa 80 Mol-% Wasserdampf enthält.

5. Verfahren nach Anspruch 1, bei dem der heiße regenerierte aktive Katalysator für katalytisches Wirbelschichtkracken aus einem Regenerator einer katalytischem Wirbelschichtkrackanlage erhalten wurde und in den unteren Abschnitt bei einer Temperatur von 620 bis 760°C eintritt.

6. Verfahren nach Anspruch 1, bei dem das Liftgas auch Mengen an $H_2$, $H_2S$, $N_2$, CO oder $CO_2$ enthält.

7

7. Verfahren nach Anspruch 1, bei dem das Beschickungsmaterial ein schweres Rückstandsbeschickungsmaterial umfaßt.

8. Verfahren nach Anspruch 1, bei dem der untere Abschnitt der vertikal ausgerichteten Steigrohrumwandlungszone zwei Axialströmungsräume enthält, die im unteren Abschnitt dieser Zone nicht miteinander verbunden sind, wobei die Suspension des Katalysators und Liftgases aufwärts in einem der Strömungsräume fließt und das Beschickungsmaterial im Gleichstrom mit dieser Suspension in dem äußeren dieser Strömungsräume fließt und sich an einer für die Einführung der normalerweise flüssigen Kohlenwasserstoffe in die aufwärts fließende Suspension geeigneten Stelle vereinigt.

9. Verfahren nach Anspruch 8, bei dem der untere Abschnitt der vertikal ausgerichteten Steigrohrumwandlungszone zwei konzentrische röhrenförmige Teile aufweist, die einen ringförmigen Strömungsraum und einen mittigen Strömungsraum ergeben, welche im unteren Abschnitt dieser Zone nicht miteinander in Verbindung stehen, wobei die Suspension von Katalysator und Liftgas aufwärts in dem ringförmigen Strömungsraum fließt und das Beschickungsmaterial im Gleichstrom zu dieser Suspension durch den mittigen Raum des Steigrohres aufwärts fließt.

## Revendications

1. Un procédé pour la conversion d'une charge de départ renfermant des hydrocarbures normalement liquides en hydrocarbures de point d'ébullition plus bas dans une zone de conversion à tube élévateur généralement orientée verticalement consistant à faire passer une suspension à sens d'écoulement ascendant, composée essentiellement d'un catalyseur de craquage catalytique fluide actif, régénéré, chaud dans un gaz d'entraînement, à travers une section de traitement inférieure de ladite zone de conversion à tube élévateur orientée verticalement, à introduire la charge d'alimentation dans la suspension à sens d'écoulement ascendant en un endroit de la zone de conversion à tube élévateur en aval de la partie inférieure pour former un mélange de catalyseur, de charge et de gaz d'entraînement dans lequel le catalyseur est répartide façon relativement uniforme et à faire réagir ensuite la charge d'alimentation avec le catalyseur dans la partie supérieure de la zone de conversion à tube élévateur dans des conditions réactionnelles suffisantes pour réaliser la conversion souhaitée, caractérisé en ce que le gaz d'entraînement est constitué par des hydrocarbures ne contenant pas plus de 10% molaire d'hydrocarbures en $C_3$ et plus lourds (calculés sur une base anhydre) et est introduit dans des conditions de traitement choisies pour carboniser sélectivement des sites réactifs sur le catalyseur avant tout contact avec la charge d'alimentation tout en accélérant simultanément le catalyseur jusqu'a obtention d'une vitesse suffisante pour assurer un écoulement dilué turbulent au point de contact avec la charge de départ.

2. Procédé selon la revendication 1, dans lequel les conditions de traitement incluent un temps de séjour du catalyseur dans ladite section inférieure de 0,5 à 15 secondes, une température de 500 à 800°C et un rapport pondéral de catalyseur à hydrocarbure dans le gaz d'entraînement supérieur à 80.

3. Procédé selon la revendication 1, dans lequel la vitesse superficielle moyenne du gaz d'entraînement dans ladite section inférieure s'échelonne de 1,8 à moins de 12,2 mètres par seconde.

4. Procédé selon la revendication 1, dans lequel les gaz d'entraînement contient jusqu'à environ 80% molaire de vapeur.

5. Procédé selon la revendication 1, dans lequel le catalyseur de craquage catalytique fluide actif, régénéré, chaud est obtenu à partir d'un régénérateur d'une unité de craquage catalytique fluide et pénètre dans ladite section inférieure à une température de 620 à 760°C.

6. Procédé selon la revendication 1, dans lequel ledit gaz d'entraînement contient également des quantités de $H_2$, $H_2S$, $N_2$, $CO$ ou $CO_2$.

7. Procédé selon la revendication 1, dans lequel la matière première est constituée par une charge résiduelle lourde.

8. Procédé selon la revendication 1, dans lequel la partie inférieure de la zone de conversion à tube élévateur orientée verticalement comporte deux espaces de circulation axiaux qui ne communiquent pas à la partie inférieure de la dite zone et dans lequel la suspension de catalyseur et de gaz d'entraînement s'écoule vers le haut dans un desdits espaces de circulation et la charge d'alimentation circule dans le même sens que la suspension dans l'autre espace de circulation en se rejoignant en un endroit approprié pour l'introduction des hydrocarbures normalement liquides dans ladite suspension circulant vers le haut.

9. Procédé selon la revendication 8 dans lequel la partie inférieure de la zone de conversion à tube élévateur orientée verticalement comporte deux éléments tubulaires concentriques ménageant un espace de circulation annulaire et un espace de circulation central qui ne communiquent pas à la partie inférieure de ladite zone et dans lequel la suspension de catalyseur et de gaz d'entraînement s'écoule vers le haut dans l'espace de circulation annulaire et la charge d'alimentation s'élève dans l'espace central du tube élévateur dans le même sens d'écoulement que ladite suspension.